# DEMANDE DE BREVET EUROPEEN

(11) **EP 1 033 603 A2**
(43) Date de publication de la demande: **06.09.2000**
(21) Numéro de dépôt: 00104182.1
(22) Date de dépôt: 29.02.2000
(51) Int. Cl.: G02C 5/00, B05D 5/06, B44D 5/00

(54) **Procédé de traitement de montures de lunettes avec de l'émail**

(30) Priorité: 04.03.1999 IT VI990043
(71) Demandeur: Casanova s.r.l., 36015 Schio (Vicenza) (IT)
(72) Inventeur: Bortoloso, Franco, 36015 Schio (Vicenza) (IT)
(74) Mandataire: Bettello, Pietro, Dott. Ing.

(57) **Abrégé**

Procédé de traitement de montures de lunettes avec de l'émail, en particulier sur les garnitures de la coque de la structure, où l'émail est destiné à être déposé dans l'espace intermédiaire séparant deux barrettes contiguës, ledit procédé étant caractérisé par le fait de prévoir l'utilisation d'une pellicule à adhérence totale, qui joue le rôle d'élément de base pendant le dépôt de l'émail dans le logement de la garniture.

## Description

L'invention se rapporte à un procédé de traitement de montures de lunettes avec de l'émail, en particulier sur les garnitures de la coque de la structure ; l'invention se rapporte en outre à la monture obtenue avec le procédé précité.

On connaît bien l'utilisation des émaux comme éléments décoratifs pour lunettes, où ces émaux sont déposés entre deux barrettes contiguës, dont l'espace intermédiaire est précisément occupé par les émaux qui, grâce à leurs couleurs, ainsi qu'aux propriétés de transparence, confèrent à la monture un effet esthétique particulier.

L'inconvénient principal de ce mode de travail est dû au fait que les émaux tendent à adhérer aux parois des barrettes de retenue, de sorte qu'ils se disposent de manière à présenter leurs surfaces avec la concavité tournée vers l'extérieur, ce qui est préjudiciable à l'aspect esthétique d'ensemble de la décoration.

Dans le brevet pour invention industrielle n° 1221359, on décrit un procédé qui améliore l'aspect esthétique des lunettes, en prévoyant que, sur la surface de l'émail exposée à la vue, on applique un vernis transparent, auquel on fait prendre une section transversale lenticulaire, avec la convexité tournée vers l'extérieur.

Un tel procédé présente cependant des inconvénients, tels qu'un long temps d'exécution, la nécessité que les barrettes de retenue de l'émail soient coplanaires et, surtout le fait qu'il n'est pas applicable sur des surfaces émaillées d'une certaine dimension et de formes irrégulières.

Tout ceci le rend inapplicable sur des montures de lunettes dans lesquelles l'émail est appliqué, par exemple, sur une coque latérale à section curviligne ou arrondie d'une façon quelconque, ou encore qui est relativement grande.

Le but de la présente invention est de réaliser un procédé d'application de l'émail même sur des montures qui présentent de grandes surfaces décorées et de formes irrégulières.

Un autre but est celui de réaliser un procédé d'application de l'émail sur des surfaces curvilignes, en particulier sur les garnitures de la coque latérale curviligne, même si celle-ci présente une certaine étendue et est munie de plusieurs barrettes de retenue disposées sur des niveaux mutuellement décalés.

Un autre but est celui de réaliser un procédé d'application de l'émail qui soit d'une exécution simple et rapide et qui assure l'obtention de garnitures émaillées parfaitement lisses et possédant des caractéristiques esthétiques notablement supérieures aux décorations obtenues avec les procédés connus.

Ces buts sont atteints par les caractéristiques de la revendication 1.

On prévoit l'emploi d'une pellicule à adhérence totale qui joue le rôle de base pendant le dépôt de l'émail dans le logement de la garniture.

En fonctionnement, la première opération du procédé selon l'invention consiste dans l'application, sur la partie externe de la garniture à décorer, par exemple la coque de la monture, d'une pellicule à adhérence totale, de préférence en plastique et qui présente des caractéristiques analogues à la pellicule employée dans la conservation des aliments et connue commercialement sous la marque enregistrée « Domopack ».

Grâce à ses remarquables propriétés d'adhérence, la pellicule adhère sur les barrettes et sur les filets métalliques qui composent la garniture à décorer, en constituant de cette façon des logements ou poches aptes à contenir l'émail.

La deuxième opération du procédé selon l'invention consiste dans le dépôt de l'émail, à l'état liquide ou dense, préparé avec des composants appropriés pour obtenir un effet esthétique final particulier, qui remplit complètement les logements de la garniture.

La troisième opération consiste dans le traitement catalytique de l'émail, qui se réalise en posant la monture sur des supports tournants placés dans un four de séchage, d'une construction connue en soi.

La quatrième et dernière phase consiste à retirer la pellicule en plastique de la garniture, en mettant ainsi en évidence la surface externe de la garniture émaillée, qui est, finalement, parfaitement lisse.

Une variante du procédé précité prévoit tout d'abord le dépôt d'une mince couche de vernis ou d'émail transparent, laquelle occupe les éventuelles petites zones où il ne s'est pas réalisé une adhérence parfaite entre la pellicule en plastique et le filet métallique de la garniture et, seulement ensuite, après que ladite première couche d'émail transparent a subi le traitement de catalyse, on procède au dépôt de l'émail coloré, qui remplit complètement les logements de la garniture.

De cette façon, on est certain que, lorsqu'on retire la pellicule en plastique, toute la surface des filets métalliques ou dès barrettes est entièrement visible de l'extérieur, avec des résultats esthétiques remarquables.

Enfin, pour accentuer encore l'effet esthétique, on mélange dans l'émail transparent déposé en premier lieu des éléments additifs tels que des poudres d'or, de petites pierres colorées ou autres, pour améliorer l'effet esthétique final de la monture de lunettes.

Ces caractéristiques seront mieux mises en évidence par la description, donnée seulement à titre d'exemple illustratif et non limitatif, d'une monture de lunettes décorée à l'émail par le procédé selon l'invention, à l'aide de la planche de dessins annexée, où :
- la Fig. 1 représente une vue en perspective d'une monture avec une coque curviligne et une garniture décorée à l'émail ;
- la Fig. 2 représente une vue en plan de la coque, en coupe selon la ligne II-II de la Fig. 1, de la monture de ladite figure, après l'application de la pellicule adhésive ;
- la Fig. 3 représente la vue en plan de la coque de la Fig. 2, à la fin du procédé de décoration avec de l'émail.

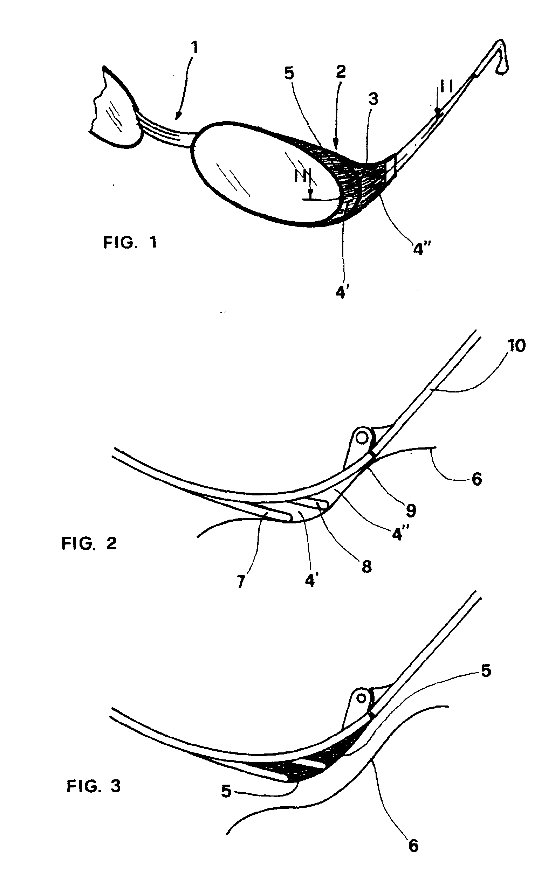

Comme on peut le voir sur la Fig. 1, la monture 1 est munie d'une coque 2 curviligne et de grandes dimensions et où les filets métalliques qui composent la garniture 3 définissent deux logements 4' et 4", dans lesquels on place l'émail décoratif 5.

La Fig. 2 illustre la première phase du procédé selon l'invention, consistant dans l'application, extérieurement à la coque 2, d'une pellicule en plastique 6, laquelle, étant du type appelé auto-adhésif, adhère parfaitement aux surfaces saillantes de la garniture 3 et, précisément, sur la portion de monture 7 qui soutient le verre, sur le filet intermédiaire 8 et sur la barrette 9 qui constitue la charnière de la branche 10.

La Fig. 3 illustre la deuxième phase du procédé selon l'invention, pendant laquelle l'opérateur procède au dépôt de l'émail décoratif 5 dans les logements 4' et 4".

Il ressort clairement de la lecture de la description qui précède, que les buts cités plus haut ont été atteints. Le procédé de traitement à l'émail conforme à l'invention, est très simple à exécuter et se trouve adaptable à n'importe quel type de conformation de la garniture.

## Revendications

1. Procédé de traitement de montures de lunettes avec de l'émail, en particulier sur les garnitures de la coque de la structure, où l'émail est destiné à être déposé dans l'espace intermédiaire séparant deux barrettes contiguës, ledit procédé étant caractérisé par le fait de prévoir l'utilisation d'une pellicule à adhérence totale, qui joue le rôle d'élément de base pendant le dépôt de l'émail dans le logement de la garniture.

2. Procédé selon la revendication 1, caractérisé par le fait que la pellicule à adhérence totale présente des caractéristiques analogues à la pellicule en plastique employée dans la conservation des aliments et connue commercialement sous la marque enregistrée « Domopack ».

3. Procédé selon les revendications 1 et 2, caractérisé en ce qu'il comprend les phases suivantes :
1^{ère} phase - application sur la partie externe de la garniture à décorer d'une pellicule à adhérence totale, laquelle, grâce à ses notables propriétés d'adhérence, adhère sur les barrettes et sur les filets métalliques qui composent la garniture à décorer, en constituant de cette façon des logements ou petites poches aptes à contenir l'émail.
2^{ème} phase - dépôt de l'émail, à l'état liquide ou dense, préparé avec des composants appropriés pour obtenir un effet esthétique final particulier, qui remplit complètement les logements ou poches précitées de la garniture.
3^{ème} phase - traitement catalytique de l'émail, réalisé en disposant la monture sur des supports tournants placés dans un four de séchage, d'une construction connue en soi.
4^{ème} phase - élimination de la pellicule en plastique de la garniture, de manière à rendre apparente la surface externe de la garniture émaillée, qui est parfaitement lisse.

4. Procédé selon les revendications 1 et 2, caractérisé par le fait de se dérouler selon les phases de travail suivantes :
1^{ère} phase - application sur la partie externe de la garniture à décorer d'une pellicule à adhérence totale, laquelle, grâce à ses notables propriétés d'adhérence, adhère sur les barrettes et sur les filets métalliques qui composent la garniture à décorer, en constituant de cette façon des logements ou petites poches aptes à contenir l'émail.
2^{ème} phase - dépôt, dans les poches de logements précitées, d'une mince couche de vernis ou d'émail transparent, laquelle occupe les éventuelles zones locales où il ne s'est pas réalisé une parfaite adhérence entre la pellicule à adhérence totale, le filet ou la barrette métallique de la garniture à décorer.
3^{ème} phase - traitement catalytique du vernis ou de l'émail transparent réalisé en disposant la monture sur des supports tournants placés dans un four de séchage, d'une construction connue en soi.
4^{ème} phase - dépôt de l'émail, à l'état liquide ou dense, préparé avec des composants appropriés pour obtenir un effet esthétique final particulier, qui remplit complètement les logements ou poches précitées de la garniture.
5^{ème} phase - traitement catalytique de l'émail réalisé en disposant la monture sur des supports tournants placés dans un four de séchage, d'une construction connue en soi.
6^{ème} phase - élimination de la pellicule en plastique de la garniture, de manière à rendre apparente la surface externe de la garniture émaillée, qui est parfaitement lisse.

5. Procédé selon la revendication 4, caractérisé par le fait qu'on mélange dans le vernis ou l'émail transparent des éléments additifs tels que des poudres d'or, de petites pierres colorées ou autres, pour améliorer l'effet esthétique final de la monture de lunettes.

6. Procédé selon une ou plusieurs des revendications précédentes, caractérisé par le fait d'être appliqué à des garnitures à décorer où les barrettes ou les filets métalliques de retenue de l'émail sont en totalité ou en partie mutuellement non coplanaires.

7. Procédé selon une ou plusieurs des revendications précédentes, caractérisé par le fait d'être appliqué à des garnitures à décorer de grandes dimensions et de formes irrégulières.

8. Procédé selon une ou plusieurs des revendications précédentes, caractérisé par le fait d'être appliqué sur des garnitures à décorer présentes sur la coque de la monture, ladite coque présentant une conformation curviligne.

9. Monture de lunettes munie de garnitures décorées à l'émail selon le procédé décrit dans une ou plusieurs des revendications précédentes, caractérisée par le fait de présenter un coque (2) curviligne et/ou de grandes dimensions, où les filets métalliques qui composent la garniture (3) définissent des logements (4', 4"), dans lesquels on place l'émail décoratif (5), après l'application sur la partie externe de ladite coque d'une pellicule (6) qui, étant du type auto-adhésif, adhère parfaitement aux surfaces saillantes de ladite garniture (3), précisément sur la portion de monture (7) qui soutient le verre, sur le filet intermédiaire (8) et sur la barrette (9) qui constitue la charnière de la branche (10), ledit émail étant ensuite traité par catalyse et la pellicule précitée étant encore ensuite retirée pour présenter la surface externe parfaitement lisse de la décoration finale ainsi réalisée.

10. Monture de lunettes munie de garnitures décorées à l'émail conformément au procédé décrit dans une ou plusieurs des revendications 1 à 8.
